# FASCICULE DE BREVET EUROPEEN

(11) **EP 2 574 571 B1**
(45) Date de publication et mention de la délivrance du brevet: **10.09.2014**
(21) Numéro de dépôt: 12008610.3
(22) Date de dépôt: 11.03.2010
(51) Int. Cl.: B65D 77/20, B65D 79/00, A47G 19/22, B65B 7/28

(54) **Conteneur en matière plastique contenant du vin**
Wein enthaltender Behälter aus Kunststoff
Plastic container containing wine

(30) Priorité: 16.03.2009 FR 0901210; 16.03.2009 FR 0901211
(43) Date de publication de la demande: 03.04.2013
(62) Demande divisionnaire de: 10711433.2
(73) Titulaire: 1/4 Vin, 83210 Sollies-Pont (FR)
(72) Inventeur: Carvin, Pascal, 83210 Sollies-Pont (FR); Mura, Christian, 83330 Plan du Castellet (FR)
(74) Mandataire: Marchand, André

(56) Documents cités:
- EP-A- 0 943 553
- FR-A- 2 630 408
- FR-A- 2 735 003

## Description

### DOMAINE TECHNIQUE

La présente invention est relative à un conteneur rempli de vin qui incorpore un verre à vin.

L'invention est notamment relative à un conteneur rempli de vin conditionné sous atmosphère modifiée, qui incorpore un verre en matière plastique.

### ETAT DE LA TECHNIQUE

Le conditionnement du vin dans un verre à boire fermé a été décrit dans le brevet FR2735003. Le conteneur décrit dans ce brevet comporte un élément de fermeture épousant la paroi du conteneur afin d'assurer l'étanchéité du conditionnement ; l'élément de fermeture comporte une face inférieure plane située à proximité de la surface libre du vin afin de délimiter un espace résiduel au plus égal à deux centimètres cube. Le verre est réalisé en verre ou en plastique.

Le choix d'un espace résiduel - également désigné par « espace de tête » - aussi réduit, s'il permet de limiter le volume de gaz « piégé » dans le conteneur, nécessite d'utiliser un élément de fermeture spécifiquement adapté à la forme et aux dimensions du verre à boire considéré, ce qui est coûteux, rend difficile l'automatisation de la fermeture du verre par un tel élément, et peut également rendre difficile l'ouverture du conteneur par un consommateur d'habileté moyenne.

Il a été proposé dans le brevet EP1235501 de conditionner le vin dans un récipient fermé dont la perméabilité globale à l'oxygène est suffisamment faible pour permettre la conservation durable du vin contenu dans le récipient.

Le récipient est constitué de verre et est fermé par un opercule thermoscellable comportant une couche d'aluminium revêtue d'une couche de protection.

Le vin est conditionné sous une atmosphère appauvrie en oxygène; ainsi, l'espace de tête délimité par l'opercule, la paroi du verre, et la surface libre du vin, contient peu d'oxygène, ce qui limite l'oxydation du vin.

Notamment lorsque l'atmosphère de l'espace de tête est appauvrie en oxygène par injection de gaz inerte(s), l'espace de tête est mis en dépression par rapport à l'environnement extérieur.

Une dépression dans l'espace de tête - et par conséquent dans le vin - peut favoriser la diffusion de l'oxygène contenu dans l'air entourant le conteneur fermé, au travers des parois de ce dernier, et en particulier au travers de la pellicule de matière assurant le scellage de l'opercule au verre - à boire -, lorsque l'opercule et/ou la paroi du verre ont une faible perméabilité à l'oxygène, ce qui est préjudiciable à la bonne conservation du vin.

Cette dépression peut également occasionner une rupture ou un décollement local(e) - confiné(e) ou ponctuel(le) - de la pellicule de scellage et/ou de l'opercule, provoquant une rupture du confinement du vin, l'apparition d'une (micro)fuite de l'air ambiant pénétrant dans le conteneur et provoquant une rapide dégradation des qualités du vin.

Par ailleurs, une réduction du volume de l'espace de tête réduit le « confort » d'utilisation lorsque le verre est fermé par un opercule plan : les risques de renversement du vin sont plus élevés lors du décollage de l'opercule, ainsi que lorsque le consommateur porte le verre à ses lèvres.

Le renforcement de l'adhésion de l'opercule sur le bord - ou buvant - du verre, via une pellicule de scellage, présente des difficultés : l'augmentation de la résistance mécanique du scellage rend plus difficile le décollement de l'opercule et est susceptible de provoquer sa déchirure.

Par ailleurs, l'augmentation à cet effet de la surface d'adhésion de l'opercule sur le buvant nécessite un verre doté d'un buvant épais, ce qui nuit à la dégustation du vin.

En outre, une pellicule de scellage épaisse et/ou s'étendant sur une surface importante du buvant, est susceptible de résulter, après décollement de l'opercule, en la présence d'un reliquat de pellicule restant solidaire du buvant, ce qui nuit également au confort du consommateur.

Un autre problème lié au scellage d'un opercule sur le buvant d'un verre peut résulter d'un défaut de planéité du buvant : dans ce cas, la fermeture peut être parfaitement réalisée sur une partie seulement du contour du buvant, et peut être déficiente sur une autre partie de ce contour, favorisant alors l'apparition de fuites entre le volume interne du conteneur et le milieu (l'air en particulier) dans lequel est disposé le conteneur.

Les conteneurs décrits dans FR2735003 et EP1235501 correspondent au préambule de la revendication 1.

### EXPOSÉ DE L'INVENTION

Un objectif de l'invention est de proposer un conteneur rempli de vin comportant un verre de vin fermé par un opercule, qui permette une meilleure conservation du vin et un meilleur confort d'utilisation du verre par un consommateur.

Un objectif de l'invention est de proposer un conteneur rempli de vin essentiellement constitué par un verre de vin fermé par un opercule, qui soit amélioré et/ou qui remédie, en partie au moins, aux lacunes ou inconvénients des conteneurs remplis de vin connus.

Selon l'invention, il est proposé un conteneur comportant un verre en matière plastique contenant du vin et fermé par un opercule comportant une couche de métal, dans lequel l'opercule présente (au moins) une déformation locale arrangée pour favoriser une déformation d'une partie substantielle de l'opercule lorsqu'une différence de pression suffisante est appliquée entre les deux faces principales de l'opercule, de manière à favoriser la déformation globale de l'opercule et réduire le volume de l'espace de tête du conteneur.

La déformation locale de l'opercule peut présenter une symétrie de révolution selon l'axe longitudinal du verre.

La partie métallique de l'opercule peut présenter plusieurs déformations locales concentriques présentant chacune une symétrie de révolution.

La partie déformée de l'opercule peut présenter, en section, une forme de « U » , « V », d'une demi onde, ou d'une onde complète.

Cette (ces) déformation(s) locale(s) de l'opercule peu(ven)t être réalisée(s) par emboutissage de l'opercule ou de la feuille de métal servant à sa fabrication.

Alternativement ou en complément, l'opercule peut comporter de nombreuses déformations (locales) sensiblement régulièrement réparties sur une partie substantielle au moins de l'opercule. En particulier, l'opercule peut comporter au moins dix déformations par centimètre carré, les déformations étant de forme sensiblement identique et réparties sur au moins une surface présentant une symétrie centrée telle qu'une couronne.

Les déformations locales réparties de l'opercule peuvent être obtenues par gaufrage d'une partie au moins de l'opercule ou de la feuille de métal servant à sa fabrication.

Bien que l'opercule puisse être muni de ces déformations sur toute sa surface, une partie - ou couronne - périphérique de l'opercule peut être dénuée de déformations afin de faciliter une déformation d'ensemble de l'opercule sans détériorer le contact et l'adhésion de cette partie périphérique sur le buvant par l'intermédiaire de la pellicule de scellage.

Le verre peut comporter une première portion de paroi présentant une première épaisseur, ainsi qu'une seconde portion de paroi prolongeant la première portion de paroi et présentant une seconde épaisseur inférieure à la première épaisseur, l'aire de la seconde portion de paroi étant inférieure à l'aire de la première portion de paroi, de manière à conférer au verre une capacité de déformation élastique tout en assurant une protection suffisante contre la diffusion d'oxygène au travers de la paroi du verre.

Cette capacité de déformation élastique peut améliorer la qualité du thermoscellage d'un opercule sur le buvant du verre, notamment dans le cas d'un défaut de parallélisme entre le buvant et la tête de l'outil servant au thermoscellage.

Cette capacité de déformation élastique peut également permettre de réduire le volume de l'espace de tête lors du thermoscellage et le cas échéant de limiter une dépression dans l'espace de tête lorsque le verre est rempli de vin et fermé.

Les première et seconde portions de paroi s'étendent sous le buvant, ce dernier présentant généralement une épaisseur supérieure à l'épaisseur de la première portion de paroi.

Le rapport de la première épaisseur à la seconde épaisseur peut être situé dans une plage allant de 1,1 environ à 3, 4, ou 5 environ, en particulier dans une plage allant de 1,3 environ à 2 ou 3 environ.

Le rapport de l'aire de la première portion de paroi à l'aire de la seconde portion de paroi peut être situé dans une plage allant de 1,5 environ à 10 environ, en particulier dans une plage allant de 2 environ à 4 environ.

La seconde portion de paroi peut s'étendre en saillie ou en creux par rapport à la première portion de paroi, formant ainsi respectivement un élargissement ou un rétrécissement du volume délimité par les parois du verre.

Les première et seconde portions de paroi peuvent s'étendre selon des surfaces de révolution.

La dépression dans le conteneur peut être de l'ordre de 0,03 à 0,3 bar et le volume de l'espace de tête peut être situé dans une plage allant de 3% environ à 30% environ de la contenance du verre, en particulier dans une plage allant de 5% ou 6% environ à 10% environ de la contenance du verre.

L'invention permet notamment de réaliser des verres d'une contenance d'un ou plusieurs décilitre(s), et des conteneurs comportant ces verres et dans lesquels le volume de l'espace de tête est de l'ordre de 3% environ jusqu'à 10%, 20%, ou 30% environ de la contenance du verre.

D'autres aspects, caractéristiques, et avantages de l'invention apparaissent dans la description suivante qui se réfère aux figures annexées et illustre, sans aucun caractère limitatif, des modes préférés de réalisation de l'invention.

### BREVE DESCRIPTION DES FIGURES

La figure 1 est une vue en coupe schématique d'un verre selon un plan diamétral du verre.
La figure 2 est une vue en coupe schématique d'un verre selon un plan diamétral du verre.
La figure 3 est une vue en coupe schématique du buvant du verre illustré figure 2 et est une vue à échelle agrandie du détail III de cette figure 2.
La figure 4 est une vue en coupe schématique du buvant illustré figure 3 après scellage d'un opercule sur le buvant.
La figure 5 est une vue en coupe schématique du buvant après arrachement de l'opercule en vue de la consommation du vin.
La figure 6 est une vue en coupe schématique d'un verre selon un plan diamétral du verre.
La figure 7 est une vue de coté schématique d'un verre.
La figure 8 est une vue en plan schématique d'un opercule selon un mode de réalisation.
La figure 9 est une vue en coupe schématique selon IX-IX de l'opercule illustré figure 8.
La figure 10 est une vue en coupe schématique de l'opercule illustré figure 9 dont la partie centrale a été déformée sous l'effet d'une dépression exercée du coté de sa face inférieure.
La figure 11 est une vue en coupe schématique d'un opercule selon un autre mode de réalisation.
La figure 12 est une vue en coupe schématique illustrant la solidarisation de l'opercule de la figure 11 dont la partie centrale a été déformée, au buvant d'un verre - partiellement représenté - rempli de vin.
La figure 13 est une vue en coupe schématique selon XIII-XIII de l'opercule illustré figure 15.
La figure 14 est une vue en coupe schématique de l'opercule illustré figure 13 dont la partie centrale a été déformée sous l'effet d'une dépression.
La figure 15 est une vue en plan schématique d'un opercule selon un autre mode de réalisation.
La figure 16 est une vue en plan schématique d'un opercule selon un autre mode de réalisation.

### DESCRIPTION DETAILLEE DE L'INVENTION

Sauf indication explicite ou implicite contraire, des éléments ou organes - structurellement ou fonctionnellement - identiques ou similaires sont désignés par des repères identiques sur les différentes figures.

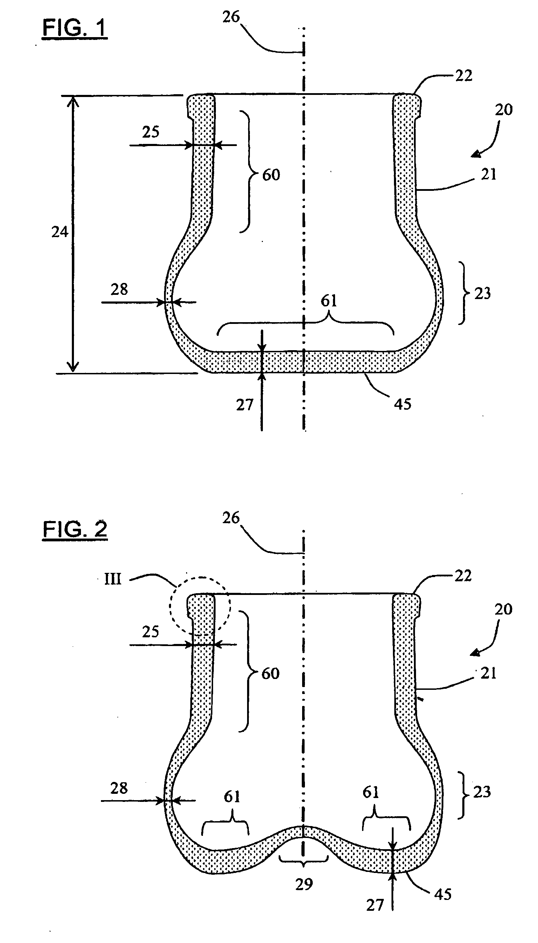

Par référence aux figures 1, 2, 6, et 7 en particulier, le verre 20 en matière plastique comporte une paroi 45 formant le fond du verre, et une paroi latérale 21 s'étendant à partir du fond 45 et terminée par un bord libre - ou buvant - 22.

Dans les configurations illustrées figures 1, 2, et 6, le verre 20 et les parois 21, 45 présentent une symétrie générale de révolution selon l'axe longitudinal vertical 26 du verre ; en particulier, la partie supérieure 60 de la paroi 21 peut présenter une forme cylindrique ou tronconique d'axe 26, de section circulaire.

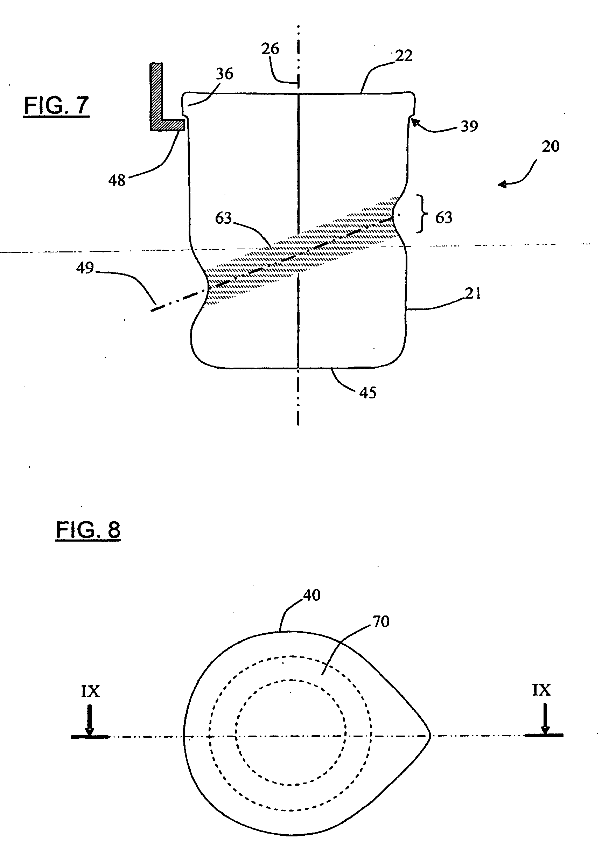

Dans la configuration illustrée figure 7, la paroi 21 ne présente pas cette symétrie de révolution, une partie amincie 63 de cette paroi s'étendant le long d'un plan - dont la trace dans le plan de la figure est repérée 49 - qui n'est pas orthogonal à l'axe longitudinal 26 du verre.

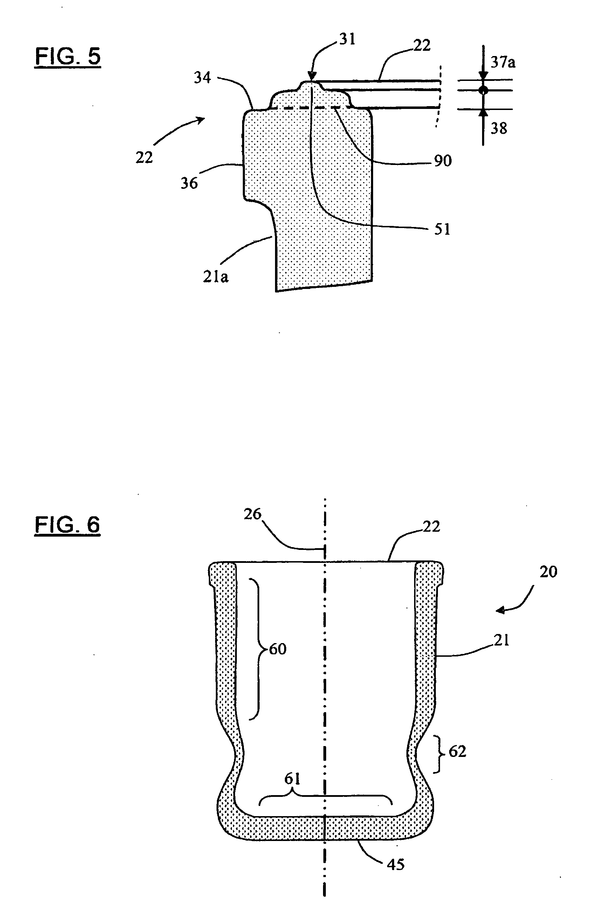

Par référence aux figures 1 et 6, la majeure partie 60 de la paroi latérale 21, de même que la majeure partie 61 de la paroi de fond 45, présente une épaisseur 25 - respectivement 27 - qui peut être de l'ordre de 1 à 2,5 millimètre.

Dans la configuration illustrée figure 1, une partie 23 inférieure de la paroi 21, qui présente une épaisseur 28 inférieure à l'épaisseur 25, 27 des portions 60, 61 de paroi, fait une saillie externe par rapport à la partie supérieure 60 de la paroi 21 ; cette portion amincie 23 relie la portion 60 de la paroi 21 à la paroi de fond 45, et résulte en un élargissement local de la section interne du verre.

Dans la configuration illustrée figure 6, la partie inférieure amincie 62 de la paroi 21, qui s'étend entre - et relie - la paroi de fond 45 et la partie supérieure 60 de la paroi 21, forme au contraire une dépression locale sur la face externe de la paroi latérale du verre, et forme un rétrécissement du volume (du verre) délimité par cette paroi.

Dans la configuration illustrée figure 2, la paroi de fond 45 comporte également une portion amincie 29 qui s'étend en position centrale et est entourée par la portion 61 épaisse de paroi.

Ces portions amincies de paroi, dont l'épaisseur peut être de l'ordre de 0, 5 à 1 millimètre, facilitent une déformation sensiblement élastique du verre 20, en particulier lorsque le verre est soumis à un effort de compression selon son axe longitudinal 26 ; cela permet, notamment lors du scellage d'un opercule, de diminuer la hauteur 24 du verre de 1% à 2% par exemple, et de provoquer une diminution du volume de l'espace de tête.

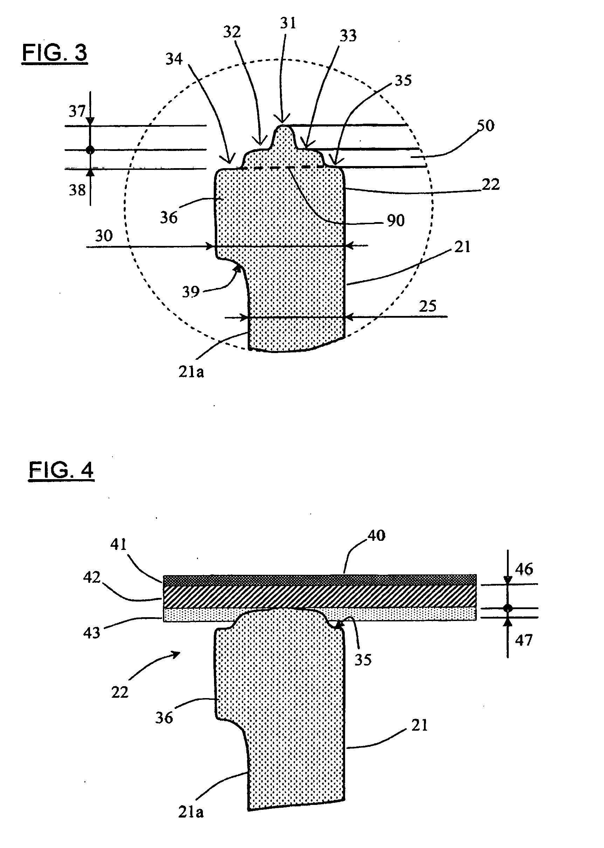

Par référence à la figure 3, le buvant 22 comporte une portion 36 périphérique s'étendant en saillie par rapport à la face externe 21a de la paroi latérale 21, et formant une collerette annulaire saillante.

Comme illustré figure 7, cette collerette 39 peut servir d'appui pour recevoir l'extrémité d'un outil 48 de préhension, ce qui facilite la manipulation du verre ou de son ébauche, par l'intermédiaire de cet outil, lors de la fabrication du verre par moulage ; cette fabrication est de préférence réalisée par injection d'une matière thermoplastique pour l'obtention d'une ébauche d'un verre, puis par soufflage de l'ébauche pour l'obtention du verre.

Par référence à la figure 3, l'extrémité supérieure du buvant 22 comporte une nervure 90 en forme de « T » renversé, qui s'étend au dessus de deux surfaces 34, 35 du buvant s'étendant de part et d'autre de la nervure 90. Ces surfaces 34, 35 sont sensiblement planes et coplanaires, i.e. font partie ou s'étendent le long d'un plan orthogonal à l'axe longitudinal du verre.

Cette configuration confère à la section transversale (diamétrale) de l'extrémité supérieure du buvant une forme de gradins à trois niveaux et cinq « marches » 31 à 35 : les faces/ surfaces 34, 35 forment deux « marches » d'un premier niveau ; deux autres faces/surfaces 32, 33 sensiblement coplanaires, qui correspondent aux deux ailes de la forme en « T » et s'étendent au dessus des surfaces 34, 35, forment deux « marches » d'un second niveau ; et une surface 31 centrale qui correspond à l'extrémité de la jambe de la forme en « T » et s'étend au dessus des surfaces 32, 33, forme la cinquième « marche » d'un troisième niveau.

De préférence, la hauteur 38 séparant les surfaces 32 et 34 d'une part, et séparant les surfaces 33 et 35 d'autre part, est supérieure à la hauteur 37 séparant les surfaces 32 et 33 de la surface centrale 31. Les hauteurs 37, 38 sont de préférence inférieures à un millimètre, et par exemple situées dans une plage allant de 0,1 millimètre à 0,5 millimètre.

La surface 31 peut être sensiblement plane et orthogonale à l'axe longitudinal du verre ou bien peut présenter, comme illustré figure 3, un profil arrondi (en section).

Des surfaces de raccordement telles que celle repérée 50, qui s'étendent par exemple le long de cylindres ayant pour axe l'axe longitudinal du verre, relient les surfaces 31 à 35 deux à deux.

Comme il ressort notamment de la comparaison des figures 3 et 4, ou de celle des figures 3 et 5, la partie 51 de la nervure 90 correspondant à la jambe de la forme en « T » « disparaît » : cette partie 51 centrale supérieure de la nervure 90, qui est soumise à un échauffement et à une compression transmis par l'opercule, se ramollit et se fond, en partie au moins, avec la partie inférieure de la nervure, qui correspond à la barre - ou aux ailes - de la forme en « T », qui est également ramollie sous l'effet de cet échauffement.

Il en résulte alors un élargissement de cette partie inférieure de la nervure, ainsi qu'un rétrécissement de la largeur des surfaces 34 et 35 ; la durée et la température de chauffage de l'opercule, l'intensité de l'effort d'appui de l'opercule sur le buvant, la largeur de ces surfaces 34, 35, ainsi que la hauteur 38, sont choisis de façon à ce que cette déformation de l'extrémité supérieure du buvant lors du thermoscellage ne provoque pas un élargissement du buvant et ne provoque pas un débordement de la matière ramollie de la nervure au-delà des surfaces 34, 35, ce qui nuirait au confort de l'utilisateur du verre.

Ainsi, les deux surfaces 34, 35 déterminent, avec la surface 50 de raccordement, un espace - ou volume - de collecte s'étendant de part et d'autre de la nervure, dans le prolongement des portions inférieures de la nervure formant la barre du « T », et en retrait du sommet et de la portion 51 de la nervure, pour recevoir de la matière plastique fluant lors de l'écrasement de la nervure provoqué par le thermoscellage.

La portion centrale 51 peut ainsi disparaître totalement (cf. figure 4) lors du scellage d'un opercule sur le buvant, ou bien en partie seulement (cf. figure 5) lorsque l'extrémité supérieure de cette portion centrale n'est pas parfaitement plane, notamment.

Dans la configuration de scellage illustrée figure 4, l'opercule 40 comporte une couche centrale 42 métallique, en particulier une couche d'aluminium dont l'épaisseur 46 peut être de l'ordre de 30 à 60 microns par exemple; la couche 42 est revêtue, sur sa face externe, d'une couche 41 qui peut être une laque ou un film de matière plastique, en particulier un film de polyester adhérent sur la couche 42.

La couche 42 est par ailleurs revêtue, sur sa face interne - également qualifiée de face inférieure par référence à la disposition des figures -, d'une couche 43 d'épaisseur 47, qui peut être constituée d'une laque ou d'une couche de matière plastique de thermoscellage.

Grâce à la nervure en « T » (déformée), la surface de contact et de scellage entre le buvant et l'opercule est augmentée sans que la largeur - ou épaisseur - 30 (cf. figure 3) du buvant ne soit augmentée.

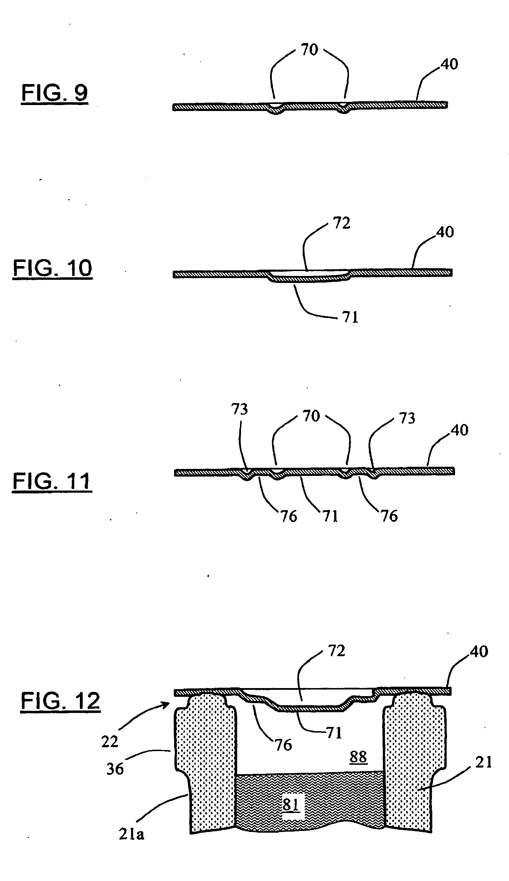

Par référence aux figures 8 et 9, l'opercule 40 comporte une seule déformation 70 circulaire centrée présentant (en section) un profil de demi onde et faisant saillie sur la face inférieure (face interne) de l'opercule.

Dans la configuration illustrée figure 11, l'opercule 40 comporte deux déformations 70, 73 circulaires concentriques présentant chacune un profil de demi onde et faisant saillie sur la face interne de l'opercule.

Par référence aux figures 10 et 12, lorsque la face interne de l'opercule (scellé sur un verre) est soumise à une dépression suffisante, les portions 71, 76 de l'opercule respectivement délimitées par les déformations 70, 73 sont entièrement déformées et saillantes sur la face interne de l'opercule.

Il en résulte l'apparition d'une cavité 72 sur une partie substantielle de la face (supérieure) externe de l'opercule, la diminution du volume de l'espace de tête (repère 88 figure 12), et la limitation de la dépression dans le verre rempli de vin 81.

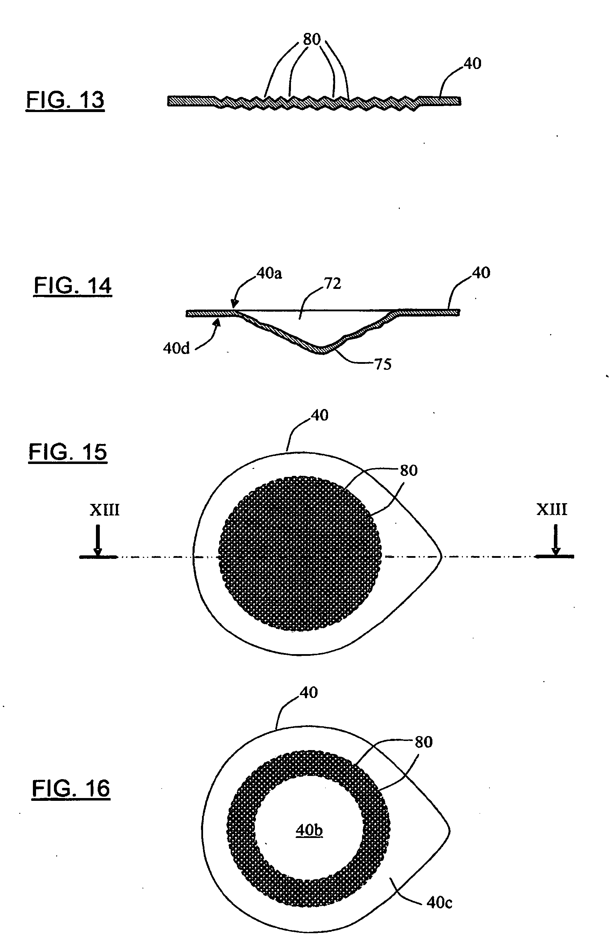

Dans les modes de réalisation correspondant aux figures 13 à 16, l'opercule 40 sensiblement plan comporte un grand nombre de déformations 80 de petite taille régulièrement réparties sur une partie substantielle de l'opercule en forme de disque (figure 15) ou en forme de couronne (figure 16).

Ces petites déformations permettent de provoquer une déformation globale 75 de la partie correspondante de l'opercule, dont la partie centrale au moins prend alors une forme de dôme saillant sur la face interne 40d de l'opercule comme illustré figure 14, lorsque cette face interne est soumise à une dépression suffisante, et la formation d'une dépression 72 d'un volume substantiel sur la face externe 40a de l'opercule.

Ces déformations 80 qui peuvent être obtenues par gaufrage, peuvent avoir une dimension inférieure à un millimètre, peuvent être de forme sensiblement identique et réparties à raison d'au moins dix déformations par centimètre carré de surface de l'opercule.

Dans la configuration de la figure 16, une partie 40b centrale de l'opercule est dénuée de déformations 80 ; une autre partie 40c périphérique - ou couronne - de l'opercule est également dénuée de déformations afin d'améliorer le contact et l'adhésion de cette partie périphérique sur le buvant du verre.

La diminution du volume de l'espace de tête 88 par la déformation de l'opercule et/ou des parois du verre peut permettre de limiter la dépression dans le verre fermé, à une valeur de l'ordre de 0,03 bar à 0,3 bar - soit de l'ordre de 3.10³ pascal à 3.10⁴ pascal -, en particulier à une valeur située dans une plage allant de 0,1 bar environ à 0,2 bar environ.

La déformation de l'opercule et/ou des parois du verre 20 peut résulter d'une dépression apparaissant dans le verre - et en particulier dans l'espace de tête - sous l'effet d'échanges s'effectuant entre le vin et le mélange gazeux contenu dans l'espace de tête et sous l'effet de transformations s'opérant dans le vin au cours du temps.

Cette (ces) déformation(s) peu(ven)t être initiée(s) ou amplifiée(s) par un appui réalisé sur l'opercule et sur le buvant du verre lors du scellage de l'opercule.

Le verre peut en particulier être fabriqué en polyéthylènetéréphtalate (PET) par un procédé d'injection soufflage.

Pour le conditionnement du vin dans un conteneur essentiellement constitué par un verre en matière plastique fermé par un opercule, on injecte un ou plusieurs gaz inerte(s) dans l'espace de tête, on scelle un opercule sur le buvant du verre, puis on provoque, lors du scellage de l'opercule , une déformation du conteneur incluant de préférence une déformation plastique de l'opercule et/ou une déformation élastique des parois du verre, pour réduire le volume de l'espace de tête.

Le(s) gaz inerte(s) peu(ven)t comporter du dioxyde de carbone.

On peut provoquer en particulier, lors du thermoscellage de l'opercule, une déformation plastique d'une nervure annulaire du buvant du verre.

## Revendications

1. Conteneur comportant un verre (20) en matière plastique contenant du vin (81) et fermé par un opercule (40) comportant une couche (42) de métal, **caractérisé en ce que** l'opercule présente une déformation locale (70, 73, 80) arrangée pour favoriser une déformation d'une partie substantielle (71, 75, 76) de l'opercule lorsque une différence de pression suffisante est appliquée entre les deux faces principales (40a, 40d) de l'opercule, de manière à favoriser la déformation globale de l'opercule et réduire le volume de l'espace de tête (88) du conteneur.

2. Conteneur selon la revendication 1 dans lequel la déformation locale (70, 73) de l'opercule présente une symétrie de révolution selon l'axe longitudinal du verre.

3. Conteneur selon la revendication 1 ou 2 dans lequel la partie métallique de l'opercule présente plusieurs déformations locales (70, 73) concentriques présentant chacune une symétrie de révolution.

4. Conteneur selon l'une quelconque des revendications 1 à 3 dans lequel la partie déformée (70, 73) présente, en section, une forme de « U » , « V », d'une demi onde, ou d'une onde complète.

5. Conteneur selon l'une quelconque des revendications 1 à 4 dans lequel l'opercule comporte des déformations (80) sensiblement régulièrement réparties sur une partie substantielle au moins de l'opercule.

6. Conteneur selon la revendication 5 dans lequel l'opercule comporte au moins dix déformations par centimètre carré, les déformations étant de forme sensiblement identique et réparties sur au moins une surface présentant une symétrie centrée telle qu'une couronne.

7. Conteneur selon l'une quelconque des revendications 1 à 6 dans lequel une partie périphérique (40c) - ou couronne - de l'opercule est dénué de déformations afin de faciliter une déformation d'ensemble de l'opercule sans détériorer le contact et l'adhésion de cette partie périphérique sur le buvant du verre.

8. Conteneur selon l'une quelconque des revendications 1 à 7 dans lequel le verre comporte une première portion (60, 61) de paroi (21, 45) présentant une première épaisseur (25, 27) et une seconde portion (23, 29, 62, 63) de paroi prolongeant la première portion de paroi et présentant une seconde épaisseur (28) inférieure à la première épaisseur, l'aire de la seconde portion de paroi étant inférieure à l'aire de la première portion de paroi, de manière à conférer au verre une capacité de déformation élastique tout en assurant une protection suffisante contre la diffusion d'oxygène au travers de la paroi du verre.

9. Conteneur selon la revendication 8 dans lequel le rapport de la première épaisseur à la seconde épaisseur est situé dans une plage allant de 1,1 environ à 3 environ, en particulier dans une plage allant de 1,3 environ à 2,0 environ.

10. Conteneur selon la revendication 8 ou 9 dans lequel la seconde portion de paroi s'étend en saillie ou en creux par rapport à la première portion de paroi, formant ainsi respectivement un élargissement ou un rétrécissement du volume délimité par les parois du verre, et dans lequel les première et seconde portions de paroi s'étendent selon des surfaces de révolution.

11. Conteneur selon l'une quelconque des revendications 1 à 10 dans lequel règne une dépression qui est de l'ordre de 0,03 à 0,3 bar.

12. Conteneur selon l'une quelconque des revendications 1 à 11 dans lequel le volume de l'espace de tête est situé dans une plage allant de 3% environ à 30% environ de la contenance du verre.

13. Conteneur selon l'une quelconque des revendications 1 à 12 dans lequel l'opercule est embouti et/ou - en partie au moins - gaufré.

## Patentansprüche

1. Behälter, ein Trinkglas (20) aus Kunststoff umfassend, das Wein (81) enthält und mit einer Schutzfolie (40) verschlossen ist, die eine Metallschicht (42) aufweist, **dadurch gekennzeichnet, dass** die Schutzfolie eine lokale Verformung (70, 73, 80) aufweist, dafür vorgesehen, eine Verformung eines erheblichen Teils (71, 75, 76) der Schutzfolie zu fördern, wenn ein ausreichender Druckunterschied zwischen den beiden Hauptseiten (40a, 40d) der Schutzfolie besteht, derart dass eine Verformung der Schutzfolie als Ganzes gefördert und das Kopfvolumen (88) des Behälters verkleinert wird.

2. Behälter nach Patentanspruch 1, in dem die lokale Verformung (70, 73) der Schutzfolie um die Längsachse des Glases rotationssymmetrisch ist.

3. Behälter nach Patentanspruch 1 oder 2, in dem der metallische Teil der Schutzfolie mehrere jeweils rotationssymmetrische, konzentrische, lokale Verformungen (70, 73) aufweist.

4. Behälter nach irgendeinem der Patentansprüche 1 bis 3, in dem der verformte Teil (70 73) im Querschnitt die Form eines U, eines V, einer Halbwelle oder einer ganzen Welle aufweist.

5. Behälter nach irgendeinem der Patentansprüche 1 bis 4, in dem die Schutzfolie Verformungen (80) aufweist, die mindestens über einen erheblichen Teil der Schutzfolie im Wesentlichen gleichmäßig verteilt sind.

6. Behälter nach Patentanspruch 5, in dem die Schutzfolie mindestens zehn Verformungen pro Quadratzentimeter aufweist, wobei die Verformungen im wesentlichen identische Form haben und über mindestens eine Oberfläche verteilt sind, die mittelpunktsymmetrisch ist, wie etwa ein Kreisring.

7. Behälter nach irgendeinem der Patentansprüche 1 bis 6, in dem ein Peripheriebereich (40c) - oder Kreisring - der Schutzfolie frei von Verformungen ist, um eine Verformung der Schutzfolie als Ganzes zu erleichtern, ohne den Kontakt und das Anhaften dieses Peripherieteils an der Trinkkante des Glases zu beeinträchtigen.

8. Behälter nach irgendeinem der Patentansprüche 1 bis 7, in dem das Glas einen ersten Bereich (60, 61) der Wand (21, 45) umfasst, der eine erste Dicke (25, 27) aufweist, und einen zweiten Wandbereich (23, 29, 62, 63), der den ersten Wandbereich fortsetzt und eine zweite Dicke (28) aufweist, die geringer ist, als die erste Dicke, wobei die Fläche des zweiten Wandbereichs kleiner ist, als die Fläche des ersten Wandbereichs, derart dass dem Glas eine Fähigkeit zur elastischen Verformung verliehen, dabei aber ein ausreichender Schutz gegen Sauerstoffdiffusion durch die Wand des Glases sichergestellt wird.

9. Behälter nach Patentanspruch 8, in dem das Verhältnis der ersten Dicke zur zweiten Dicke im Bereich von ungefähr 1,1 bis ungefähr 3 liegt, insbesondere im Bereich von ungefähr 1,3 bis ungefähr 2.

10. Behälter nach Patentanspruch 8 oder 9, in dem der zweite Wandbereich gegenüber dem ersten Wandbereich hervor- oder zurücksteht und so eine Vergrößerung bzw. Verringerung des von den Wänden des Glases begrenzten Volumens ausgebildet wird und in dem sich der erste und der zweite Wandbereich längs rotationssymmetrischer Flächen erstrecken.

11. Behälter nach irgendeinem der Patentansprüche 1 bis 10, in dem ein Unterdruck in der Größenordnung von 0,03 bis 0,3 bar herrscht.

12. Behälter nach irgendeinem der Patentansprüche 1 bis 11, in dem das Volumen des Kopfraumes in einem Bereich von ungefähr 3% bis ungefähr 30% des Volumeninhalts des Glases betragt.

13. Behälter nach irgendeinem der Patentansprüche 1 bis 12, in dem die Schutzfolie getrieft und/oder - mindestens teilweise - geprägt ist.

## Claims

1. A container including a plastics material glass (20) containing wine (81) and closed by a film lid (40) including a metal layer (42), **characterized in that** the film lid includes a local deformation (70, 73, 80) adapted to facilitate deformation of a substantial part (71, 75, 76) of the film lid when a sufficient pressure difference is applied between the two main faces (40a, 40d) of the film lid, in order to facilitate overall deformation of the film lid and to reduce the volume of the head space (88) of the container.

2. A container according to claim 1, wherein the local deformation (70, 73) of the film lid exhibits circular symmetry about the longitudinal axis of the glass.

3. A container according to claim 1 or claim 2, wherein the metal part of film lid includes a plurality of concentric local deformations (70, 73) each exhibiting circular symmetry.

4. A container according to any one of claims 1 to 3, wherein the deformed part (70, 73) has, in section, a U, V, half-wave, or full-wave shape.

5. A container according to any one of claims 1 to 4, wherein the film lid includes deformations (80) substantially regularly distributed over at least a substantial part of the film lid.

6. A container according to claim 5, wherein the film lid includes at least ten deformations per square centimeter, the deformations being of substantially identical shape and distributed over at least a surface exhibiting centered symmetry, such as a ring.

7. A container according to any one of claims 1 to 6, wherein a peripheral part (40c) (or ring) of the film lid is free of deformations in order to facilitate deformation of the film lid as a whole without deterioration of the contact and the adhesion between this peripheral part and the rim of the glass.

8. A container according to any one of claims 1 to 7, wherein the glass includes a first portion (60, 61) of a wall (21, 45) having a first thickness (25, 27) and a second wall portion (23, 29, 62, 63) extending the first wall portion and having a second thickness (28) less than the first thickness, the area of the second wall portion being less than the area of the first wall portion, so as to confer on the glass a capacity for elastic deformation whilst ensuring sufficient protection against diffusion of oxygen through the wall of the glass.

9. A container according to claim 8, wherein the ratio of the first thickness to the second thickness is in a range of approximately 1.1 to approximately 3 and in particular in a range of approximately 1.3 to approximately 2.0.

10. A container according to claim 8 or claim 9, wherein the second wall portion projects from or is recessed relative to the first wall portion, thus respectively enlarging or reducing the volume defined by the walls of the glass, and the first and second wall portions extend over surfaces of revolution.

11. A container according to any one of claims 1 to 10, wherein the reduced pressure is of the order of 0.03 bar to 0.3 bar.

12. A container according to any one of claims 1 to 11, wherein the volume of the head space is in a range of approximately 3% to approximately 30% of the capacity of the glass.

13. A container according to any one of claims 1 to 12, wherein the film lid is stamped and/or (at least in part) embossed.
